# EUROPÄISCHE PATENTANMELDUNG

(11) **EP 2 237 356 A1**
(43) Veröffentlichungstag der Anmeldung: **06.10.2010**
(21) Anmeldenummer: 10006479.9
(22) Anmeldetag: 20.02.2005
(51) Int. Cl.: H01M 8/10, H01M 4/86, H01M 4/88, H01M 4/92

(54) **Membran-Elektroden-Einheit mit hoher Leistung und deren Anwendung in Brennstoffzellen**

(30) Priorität: 21.02.2004 DE 102004008628
(62) Teilanmeldung aus: 05707542.6
(71) Anmelder: BASF Fuel Cell GmbH, 65926 Frankfurt am Main (DE)
(72) Erfinder: Schmidt, Thomas, Dr., 65456 Mörfelden-Walldorf (DE); Uensal, Oemer, Dr., 55128 Mainz (DE); Weber, Mathias, 65428 Rüsselsheim (DE); Kundler, Isabel, 61462 Königstein (DE); Calundann, Gordon, Somerset, NJ 08873 (US); Baurmeister, Jochen, Dr., 65817 Eppstein (DE)
(74) Vertreter: Luderschmidt, Schüler & Partner

(57) **Zusammenfassung**

Die vorliegende Erfindung betrifft eine Membran-Elektroden-Einheit umfassend eine mit einer Mineralsäure dotierte Polymermembran sowie zwei Elektroden, **dadurch gekennzeichnet, dass** die Polymermembran mindestens ein Polymer mit mindestens einem Stickstoffatom und mindestens eine Elektrode einen Katalysator umfasst, der aus mindestens einem Edelmetall und mindestens einem gemäss der elektrochemischen Spannungsreihe unedleres Metall gebildet wird.

## Beschreibung

Die vorliegende Erfindung betrifft Membran-Elektroden-Einheiten mit hoher Leistung, die insbesondere in sogenannten Polymerelektrolytmembran-Brennstoffzellen eingesetzt werden können.

Eine Brennstoffzelle enthält üblicherweise einen Elektrolyten und zwei durch den Elektrolyten getrennte Elektroden, bei denen einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt wird. Die durch die resultierende Brennstoffoxidation entstehende chemische Energie wird dabei direkt in elektrische Energie umgewandelt.

Eine Forderung an den Elektrolyten ist, daß dieser für Wasserstoffionen, d.h. Protonen, nicht aber für die vorstehend genannten Brennstoffe durchlässig ist.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt.

Polymerelektrolytmembranen mit Komplexen aus basischen Polymeren und starken Säuren sind beispielsweise aus WO96/13872 bekannt. Zu deren Herstellung wird ein basisches Polymer, beispielsweise Polybenzimidazol, mit einer starken Säure, wie Phosphorsäure, behandelt.

Des weiteren sind, beispielsweise aus US-A-4,017,664, auch Brennstoffzellen bekannt, deren Membran anorganische Trägermaterialien, wie beispielsweise Glasfasergewebe oder Glasfaservliese, umfassen, die mit Phosphorsäure getränkt sind.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen, insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Die Leistung einer Membran-Elektroden-Einheit hergestellt mit solchen Membranen ist in WO 01/18894 und in Electrochimica Acta, Band 41, 1996, 193-197 beschrieben und liegen bei einer Platinbeladung von 0,5 mg/cm² (Anode) und 2 mg/cm² (Kathode) kleiner als 0,2 A/cm² bei einer Spannung von 0,6 V. Bei Verwendung von Luft anstelle von Sauerstoff sinkt dieser Wert auf kleiner als 0,1 A/cm² ab.

Ein großer Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss ein Teil der bei der Reaktion entstehenden Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Die zuvor dargelegten Membran-Elektroden-Einheiten weisen bereits ein gutes Eigenschaftsprofil aus, wobei jedoch die Leistungsfähigkeit, beispielsweise die Stromdichte bei hohen Spannungen von bekannten Membran-Elektroden-Einheiten noch zu verbessern ist.

Eine weitere Aufgabe bestand darin eine Membran-Elektroden-Einheit bereitzustellen, die eine hohe Leistungsfähigkeit, insbesondere eine hohe Stromdichte bzw. bei einer hohen Spannung eine hohe Stromdichte, über einen weiten Temperaturbereich zeigt

Darüber hinaus muss die erfindungsgemäße Membran-Elektroden-Einheit eine hohe Haltbarkeit, insbesondere eine lange Lebensdauer bei den geforderten hohen Leistungsdichten aufweisen.

Ein permanente Aufgabe bei allen Membran-Elektroden-Einheit besteht darin, die Mengen an Katalysatoren zu reduzieren um die Herstellkosten zu vermindern, ohne dass dabei die Leistungsfähigkeit signifikant vermindert wird. Vorteilhafterweise soll die Membran-Elektroden-Einheit bei geringem Gasfluß und/oder bei geringem Überdruck mit einer hohen Leistungsdichte betrieben werden können.

Der vorliegenden Erfindung liegt daher die Aufgabe zugrunde, eine neuartige Membran-Elektroden-Einheit bereitzustellen, die die zuvor dargelegten Aufgaben löst.

Gegenstand der vorliegenden Erfindung ist eine Membran-Elektroden-Einheit umfassend
A) mindestens eine Polymermembran welche mindestens ein Polymer mit mindestens einem Stickstoffatom enthält, wobei die Polymermembran mindestens eine Mineralsäure enthält, die
B) mindestens zwei Elektroden,
**dadurch gekennzeichnet, dass** mindestens eine Elektrode einen Katalysator enthaltend
i. mindestens ein Edelmetall der Platingruppe, insbesondere Pt, Pd, Ir, Rh, Os, Ru, und/oder mindestens ein Edelmetall Au und/oder Ag
ii. mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V,
aufweist.

Die erfindungsgemäßen Membran-Elektroden-Einheit liefert hohe Stromstärken ohne dass dabei die Spannung allzu sehr abfällt. Ferner weisen die erfindungsgemäßen Membran-Elektroden-Einheiten eine gute Haltbarkeit bei hohen Stromstärken auf.

Ein wesentlicher Aspekt und technischer Vorteil der erfindungsgemäßen Membran-Elektroden-Einheit liegt darin, daß die hervorragende Leistungsfähigkeit mit einem bis dahin noch nicht erreichten geringen Gehalt an katalytisch aktiven Substanzen, wie beispielsweise Platin, Ruthenium oder Palladium erzielt wird.

Die in der erfindungsgemäßen Membran-Elektroden-Einheit enthaltenen Polymermembran werden die Polymere gebildet, die mindestens ein Stickstoffatom umfassen. Diese Polymere werden auch als basische Polymere bezeichnet. Die Basizität des Polymeren kann auch über das Molverhältnis von Stickstoffatomen zu Kohlenstoffatomen definiert werden. Im Rahmen der vorliegenden Erfindung werden insbesondere solche Polymere umfasst, deren Molverhältnis von Stickstoffatomen zu Kohlenstoffatomen im Bereich von 1:1 bis 1:100, vorzugsweise im Bereich von 1:2 bis 1:20 liegt. Dieses Verhältnis kann über Elementaranalyse festgestellt werden.

Basische Polymere, insbesondere Polymere mit mindestens einem Stickstoffatom sind in der Fachwelt bekannt. Im allgemeinen können erfindungsgemäß Polymere mit einem Stickstoffatom in der Hauptkette und/oder in der Seitenkette eingesetzt werden.

Zu den Polymeren mit einem Stickstoffatom in der Hauptkette gehören beispielsweise Polyphosphazene, Polyimine, Polyisocyanide, Polyetherimin, Polyanilin, Polyamide, Polyhydrazide, Polyurethane, Polyimide, Polyazole und/oder Polyazine.

Bevorzugt umfassen die Polymermembranen Polymere mit mindestens einem Stickstoffatom in einer Wiederholungseinheit verwendet. Hierbei können auch Copolymere eingesetzt werden, die neben Wiederholungseinheiten mit einem Stickstoffatom auch Wiederholungseinheiten ohne eine Stickstoffatom umfassen.

Gemäß einem besonderen Aspekt der vorliegenden Erfindung werden basische Polymere mit mindestens einem Stickstoffatom eingesetzt. Der Begriff basisch ist in der Fachwelt bekannt, wobei insbesondere Lewis- und Bronstedtbasizität hierunter zu verstehen ist.

Die Wiederholungseinheit im basischen Polymer enthält vorzugsweise einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Polymere auf Basis von Polyazol enthalten im allgemeinen wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 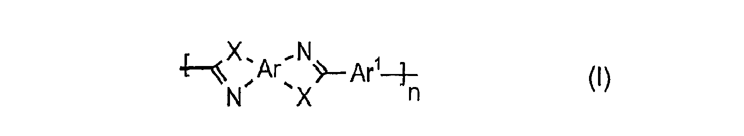 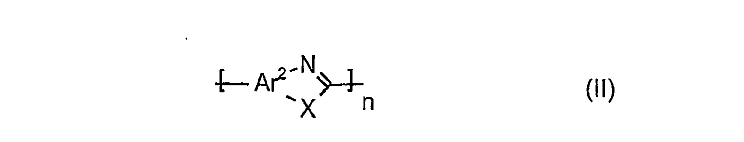 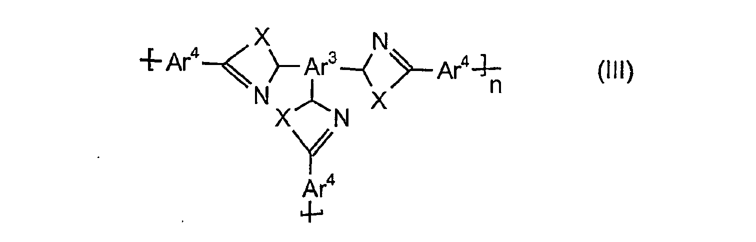 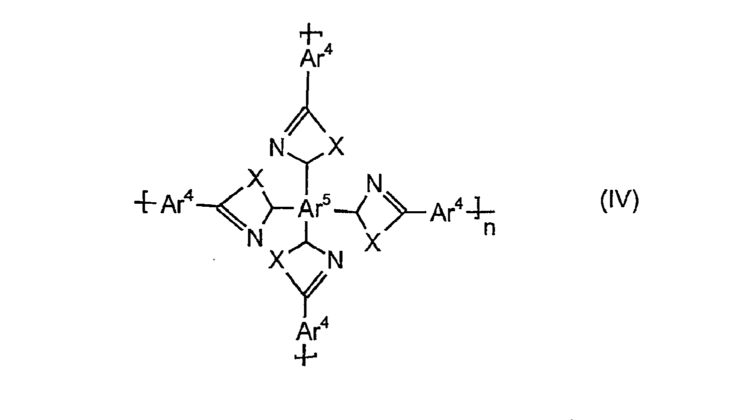 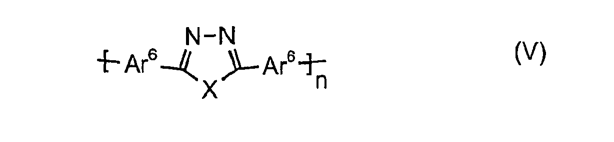 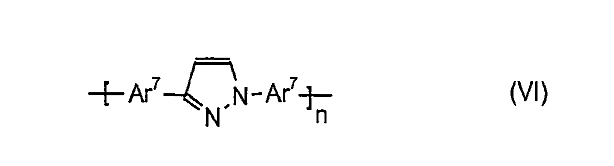 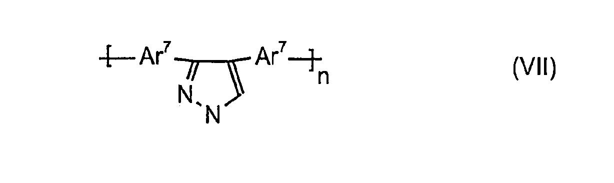 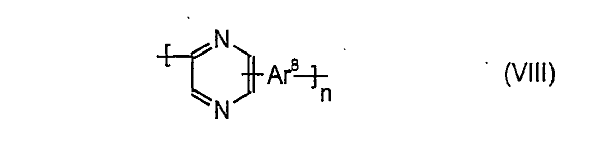 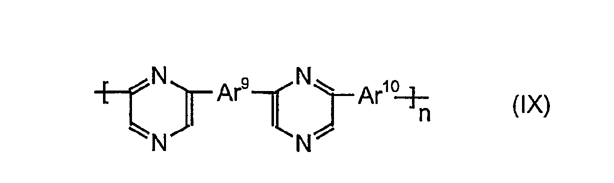 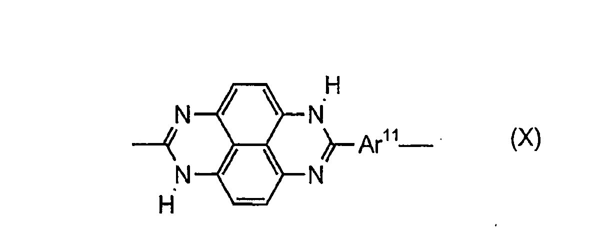 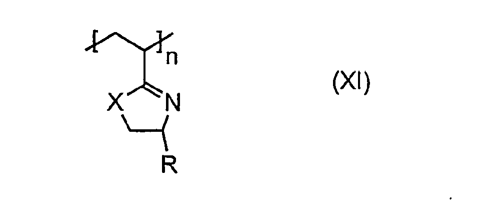 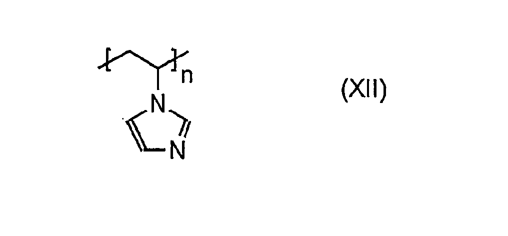 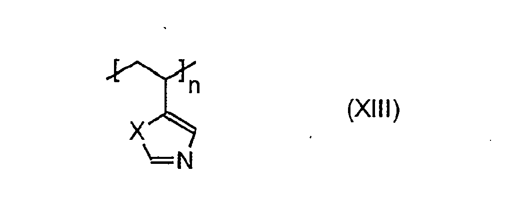 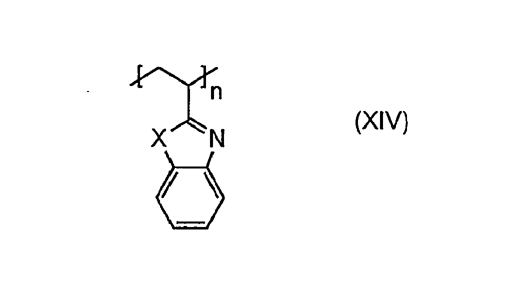 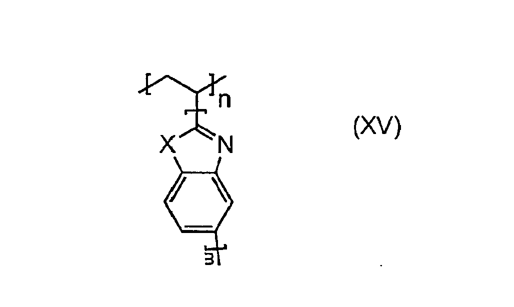 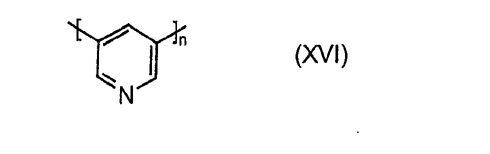 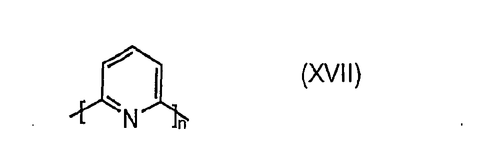 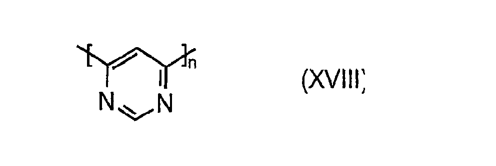 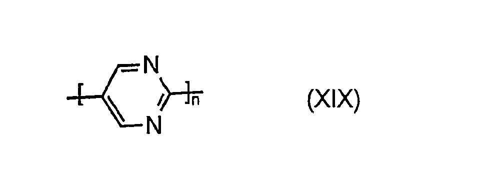 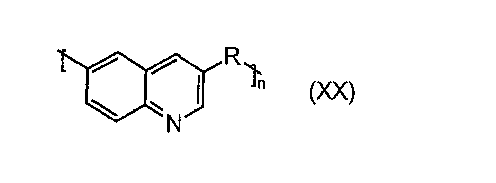 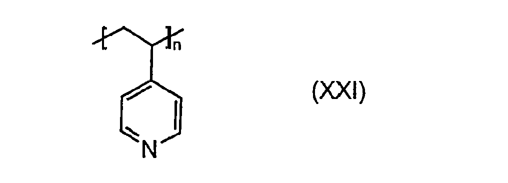 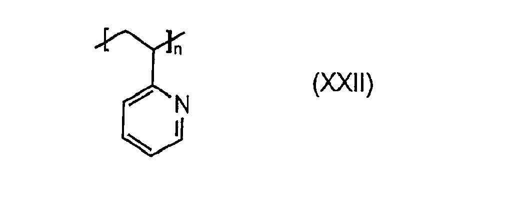 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht, mit der Maßgabe das R in der Formel (XX) nicht für Wasserstoff steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrenden Benzimidazoleinheiten werden durch die nachfolgende Formeln wiedergegeben: 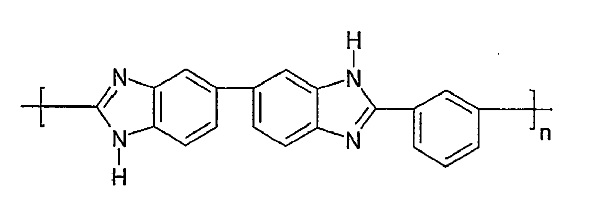 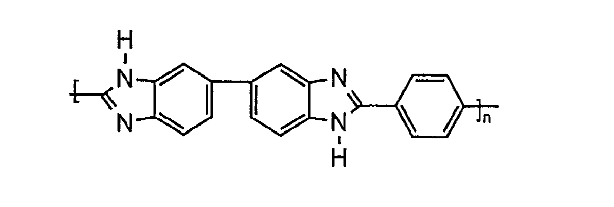 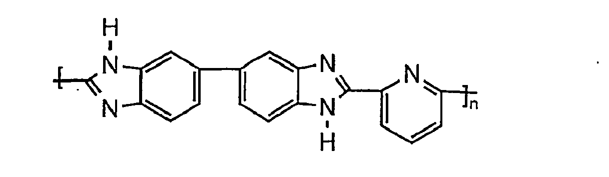 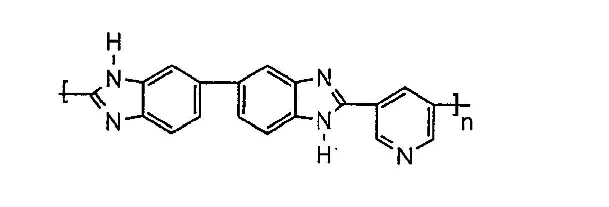 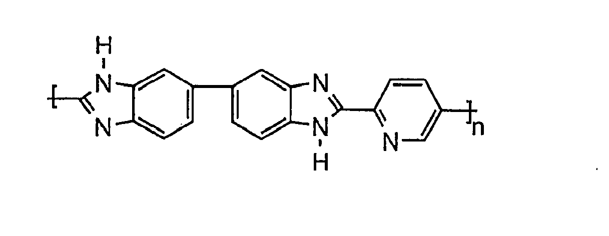 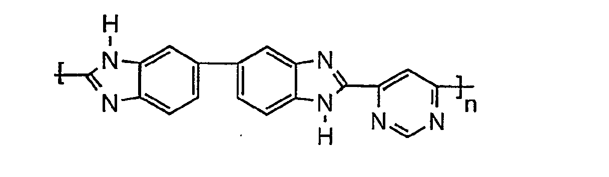 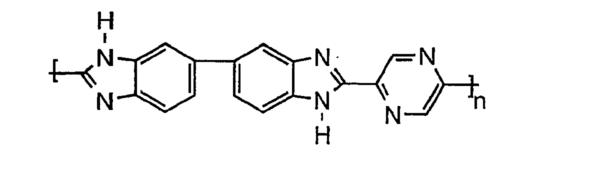 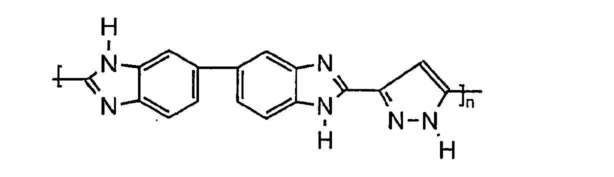 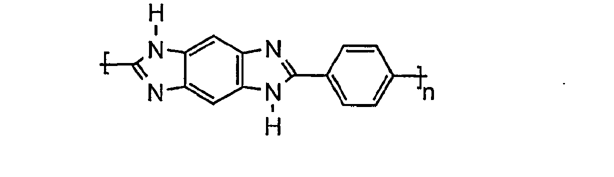 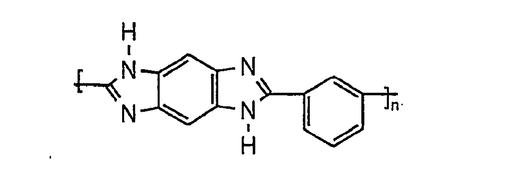 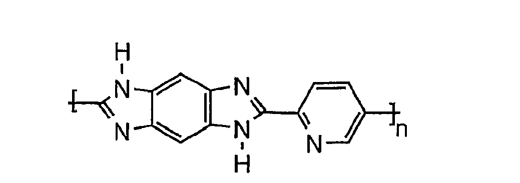 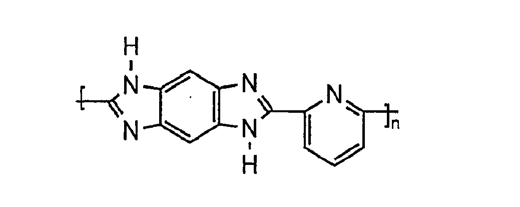 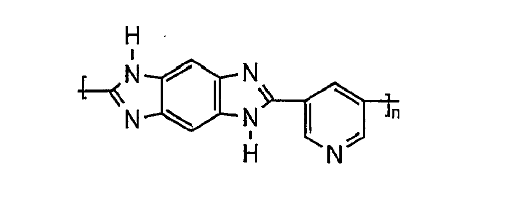 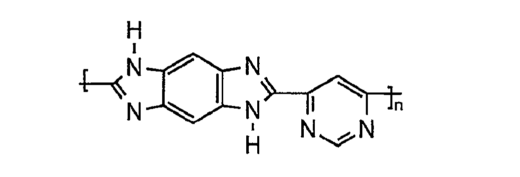 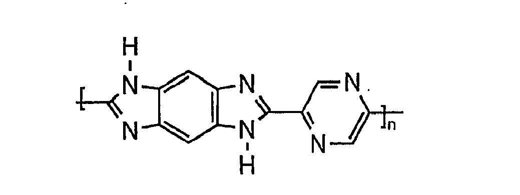 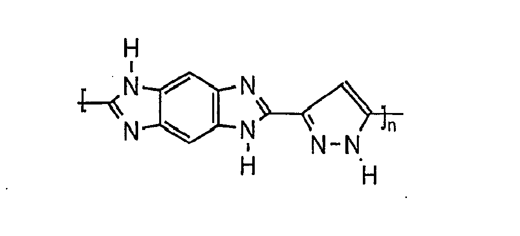 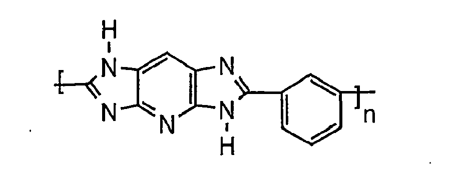 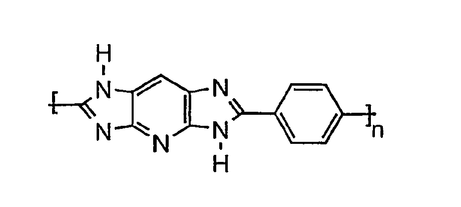 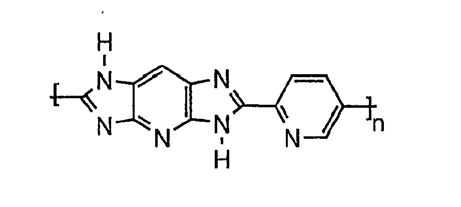 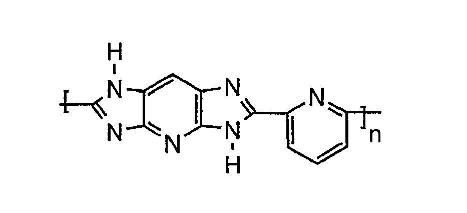 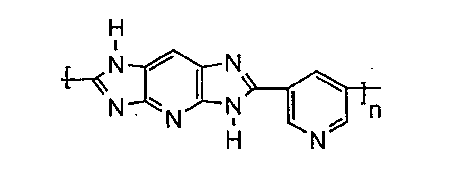 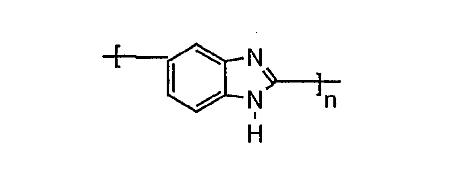 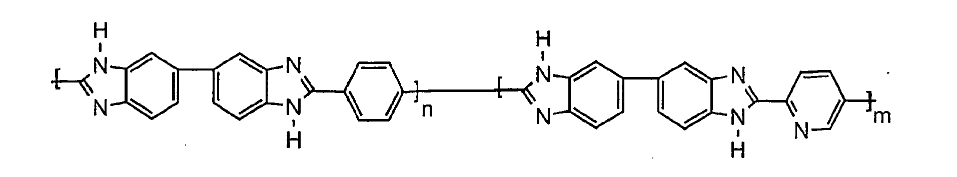 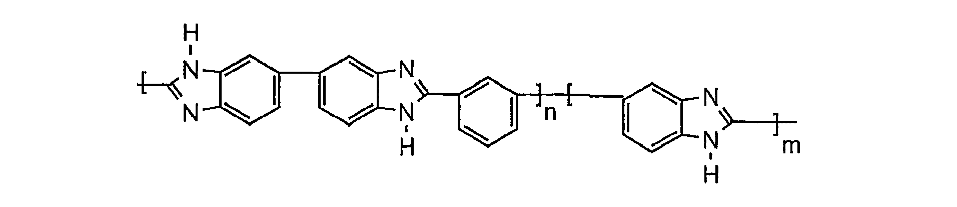 wobei n und m eine ganze Zahl größer gleich 10, vorzugsweise größer gleich 100 ist.

Weitere bevorzugte Polyazol-Polymere sind Polyimidazole, Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly(pyrimidine), und Poly(tetrazapyrene).

Bevorzugte Polyazole zeichnen sich durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise 1 bis 5 dl/g.

Besonders bevorzugt ist Celazole der Fa. Celanese. Die Eigenschaften der Polymerfolie und Polymermembran können durch Sieben des Ausgangspolymers, wie in der deutschen Patentanmeldung Nr. 10129458.1 beschrieben, verbessert werden.

Ganz besonders bevorzugt werden para-Polybenzimidazole bei der Herstellung der Polymerelektrolytmembranen eingesetzt. Hierbei umfassen die Polybenzimidazole insbesondere sechsgliederige aromatische Gruppen, die in 1,4 Stellung verknüpft sind. Besonders bevorzugt wird Poly[2,2'-(p-phenylene)-5,5'-bisbenzimidazol] eingesetzt.

Die zur Dotierung eingesetzte Polymerfolie auf Basis von basischen Polymeren kann noch weitere Zusätze an Füll- und/oder Hilfsstoffen aufweisen. Zusätzlich kann der Polymerfilm weitere Modifizierungen, beispielsweise durch Vernetzung wie in der deutschen Patentanmeldung Nr. 10110752.8 oder in WO 00/44816 aufweisen. In einer bevorzugten Ausführungsform enthält die zur Dotierung eingesetzte Polymerfolie aus einem basischen Polymer und mindestens einer Blendkomponente zusätzlich einem Vernetzer wie in der deutschen Patentanmeldung Nr. 10140147.7 beschrieben. Wesentlicher Vorteil eines solchen Systems ist die Tatsache dass höhere Dotierungsgrade und somit höhere Leitfähigkeit bei ausreichender mechanischer Membranstabilität erzielt werden können.

Neben den vorstehend genannten basischen Polymeren kann auch ein Blend aus einem oder mehreren basischen Polymeren mit einem weiteren Polymer eingesetzt werden. Die Blendkomponente hat dabei im Wesentlichen die Aufgabe die mechanischen Eigenschaften zu verbessern und die Materialkosten zu verringern. Eine bevorzugte Blendkomponente ist dabei Polyethersulfon wie in der deutschen Patentanmeldung Nr. 10052242.4 beschrieben.

Zu den bevorzugten Polymeren, die als Blendkomponente eingesetzt werden können, gehören unter anderem Polyolefine, wie Poly(cloropren), Polyacetylen, Polyphenylen, Poly(*p*-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere C-S-Bindungen in der Hauptkette, beispielsweise Polysulfidether, Polyphenylensulfid, Polyethersulfon; Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Zur Anwendung in Brennstoffzellen mit einer Dauergebrauchstemperatur oberhalb 100°C werden solche Blend-Polymere bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben. Hierbei sind Polysulfone mit einer Vicat-Erweichungstemperatur VST/A/50 von 180°C bis 230°C bevorzugt.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/ 10 min, insbesondere kleiner oder gleich 30 cm³/ 10 min und besonders bevorzugt kleiner oder gleich 20 cm³/ 10 min gemessen nach ISO 1133 auf.

Gemäß einem besonderen Aspekt kann die Polymermembran mindestens ein Polymer mit aromatischen Sulfonsäuregruppen umfassen. Aromatische Sulfonsäuregruppen sind Gruppen, bei denen die Sulfonsäuregruppe (-SO₃H) kovalent an eine aromatischen oder heteroaromatischen Gruppe gebunden ist. Die aromatische Gruppe kann ein Teil der Hauptkette (back bone) des Polymeren oder ein Teil einer Seitengruppe sein, wobei Polymere mit aromatischen Gruppen in der Hauptkette bevorzugt sind. Die Sulfonsäuregruppen können vielfach auch in Form der Salze eingesetzt werden. Des weiteren können auch Derivate, beispielsweise Ester, insbesondere Methyl- oder Ethylester, oder Halogenide der Sulfonsäuren verwendet werden, die beim Betrieb der Membran in die Sulfonsäure umgesetzt werden.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können. Bevorzugte Substituenten sind Halogenatome wie z. B. Fluor, Aminogruppen, Hydroxygruppen oder Alkylgruppen.

Dabei ist das Substitionsmuster beliebig, im Falle vom Phenylen beispielsweise kann ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Die mit Sulfonsäuregruppen modifizierten Polymere besitzen vorzugsweise einen Gehalt an Sulfonsäuregruppen im Bereich von 0,5 bis 3 meq/g, vorzugsweise 0,5 bis 2 meq/g. Dieser Wert wird über die sog. lonenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die lonenaustauschkapazität (IEC) berechnet.

Polymere mit an aromatische Gruppen kovalent gebundene Sulfonsäuregruppen sind in der Fachwelt bekannt. So können Polymer mit aromatischen Sulfonsäuregruppen beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

Im Hinblick auf Polymere mit aromatischen Sulfonsäuregruppen, deren aromatische Reste Teil der Seitengruppe sind, sei insbesondere auf Polystyrolderivate verwiesen. So beschreibt die Druckschrift US-A-6110616 Copolymere aus Butadien und Styrol und deren anschließende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Gemäß einem besonderen Aspekt der vorliegenden Erfindung werden hochtemperaturstabile Thermoplaste eingesetzt, die an aromatische Gruppen gebundene Sulfonsäuregruppen aufweisen. Im allgemeinen weisen derartige Polymere in der Hauptkette aromatische Gruppen auf. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bevorzugt.

Die zuvor dargelegten Polymere mit an Aromaten gebundenen Sulfonsäuregruppen können einzeln oder als Mischung eingesetzt werden, wobei insbesondere Mischungen bevorzugt sind, die Polymere mit Aromaten in der Hauptkette aufweisen.

Das Molekulargewicht der Polymere mit an Aromaten gebundenen Sulfonsäuregruppen kann, je nach Art des Polymeren sowie dessen Verarbeitbarkeit in weiten Bereichen liegen. Vorzugsweise liegt das Gewichtsmittel des Molekulargewichts M_{w} im Bereich von 5000 bis 10 000 000, insbesondere 10000 bis 1000 000, besonders bevorzugt 15 000 bis 50 000. Gemäß einem besonderen Aspekt der vorliegenden Erfindung werden Polymere mit an Aromaten gebundenen Sulfonsäuregruppen, die einen geringen Polydispersitätsindex M_{w}/Mₙ aufweisen. Vorzugsweise liegt der Polydispersitätsindex im Bereich 1 bis 5, insbesondere 1 bis 4.

Zur weiteren Verbesserung der anwendungstechnischen Eigenschaften kann das flächige Material Füllstoffe, insbesondere protonenleitende Füllstoffe, aufweisen.

Nicht limitierende Beispiele für Protonenleitende Füllstoffe sind
- Sulfate wie:: CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄,
- Phosphate wie: Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀,
- Polysäure wie: H₃PW₁₂O₄₀.nH₂O (n=21-29), H₃SiW₁₂O₄₀.nH₂O (ri=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄
- Selenite und Arsenide wie: (NH₄)₃H(SeO₄)₂, UO₂A_{S}O₄, (NH₄)₃H(SeO₄)₂, KH₂AsO₄, Cs₃H(SeO₄)₂, Rb₃H(SeO₄)₂,
- Phosphide wie: ZrP, TiP, HfP
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H- Montmorillonite
- Säuren wie: HCIO₄, SbF₅
- Füllstoffe wie: Carbide, insbesondere SiC, Si₃N₄, Fasern, insbesondere Glasfasern, Glaspulvern und/oder Polymerfasern, bevorzugt auf Basis von Polyazolen.

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfasst die Membran höchstens 80 Gew.-%, vorzugsweise höchstens 50 Gew.-% und besonders bevorzugt höchstens 20 Gew.-% Additive.

Zur Herstellung der Polymerfolie werden die Polymerbestandteile zunächst wie in vorstehend zitierten Anmeldungen, beispielsweise DE Nr. 10110752.8 oder WO 00/44816, beschrieben gelöst bzw. suspendiert und anschließend zur Herstellung der Polymerfolien eingesetzt. Des weiteren können die Polymerfolien gemäß DE Nr. 10052237.8 kontinuierlich hergestellt werden.

Alternativ dazu kann die Folienbildung gemäß dem in der japanischen Anmeldung Nr. Hei 10-125560 beschriebenen Verfahren erfolgen.

Hierbei wird die Lösung in einen Zylinder mit zylinderförmiger Innenfläche gegossen, und anschließend der Zylinder in Drehung versetzt wird. Gleichzeitig läßt man das Lösungsmittel durch die durch die Drehung verursachte Zentrifugalkraft abdampfen; wobei sich auf der Innenfläche des Zylinders eine zylindrische Polymerfolie weitgehend einheitlicher Dicke bildet.

Mit diesem Verfahren kann das basische Polymer mit einer einheitlichen Matrix ausgebildet werden. Dieses in der japanischen Patentanmeldung Hei 10-125560 beschriebene Verfahren ist ebenfalls Bestandteil der vorliegenden Beschreibung.

Anschließend wird das Lösungsmittel entfernt. Dies kann mittel dem Fachmann bekannter Methoden geschehen, beispielsweise durch Trocknung. Anschließend wird die Folie aus basischem Polymer oder Polymerblend mit einer starken Säure, vorzugsweise einer Mineralsäure, imprägniert bzw. dotiert, wobei die Folie wie in der deutschen Patentanmeldung Nr. 10109829.4 beschrieben zuvor behandelt werden kann. Diese Variante ist vorteilhaft um Wechselwirkungen des Restlösemittels mit der Sperrschicht auszuschließen.

Hierzu wird die Folie umfassend mindestens ein Polymer mit mindestens einem Stickstoffatom in eine starke Säure eingetaucht werden, so daß die Folie mit der starken Säure imprägniert und zur protonenleitenden Membran wird. Hierzu wird das vorzugsweise basische Polymer üblicherweise in eine hochkonzentrierte starke Säure mit einer Temperatur von mindestens 35°C über einen Zeitraum von mehreren Minuten bis zu mehreren Stunden eingetaucht.

Als starke Säure verwendet man Mineralsäure, insbesondere Phosphorsäure und/oder Schwefelsäure.

Im Rahmen der vorliegenden Beschreibung versteht man unter "Phosphorsäure" Polyphosphorsäure (Hₙ₊₂PₙO₃ₙ₊₁ (n>1) besitzen üblicherweise einen Gehalt berechnet als P₂O₅ (acidimetrisch) von mindestens 83%), Phosphonsäure (H₃PO₃), Orthophosphorsäure (H₃PO₄), Pyrophosphorsäure (H₄P₂O₇), Triphosphorsäure (H₅P₃O₁₀) und Metaphosphorsäure. Die Phosphorsäure, insbesondere Orthophosphorsäure, hat vorzugsweise eine Konzentration von mindestens 80 Gewichtsprozent, besonders bevorzugt eine Konzentration von mindestens 85 Gewichtsprozent, noch weiter bevorzugt eine Konzentration von mindestens 87 Gewichtsprozent und ganz besonders bevorzugt eine Konzentration von mindestens 89 Gewichtsprozent. Der Grund dafür ist darin zu sehen, daß das vorzugsweise basische Polymer bei zunehmender Konzentration der starken Säure mit einer größeren Zahl von Molekülen starker Säure imprägniert werden kann.

Die erhaltene Polymerelektrolytmembran ist protonenleitend. Nach der Dotierung soll der Dotierungsgrad ausgedrückt als Mol Säure pro Wiederholungseinheit grösser als 6, vorzugsweise grösser als 8 und ganz besonders bevorzugt grösser als 9 sein.

Anstelle der mittels klassischer Verfahren hergestellten Polymermembranen auf Basis von vorzugsweise basischen Polymeren können auch die polyazolhaltigen Polymermembranen wie in den deutschen Patentanmeldungen Nr. 10117686.4, 10144815.5, 10117687.2 beschrieben, eingesetzt werden. Derartige, mit mindestens einer Sperrschicht versehene Polymerelektrolytmembranen sind ebenfalls Gegenstand der vorliegenden Erfindung.

Bevorzugt können Polymermembranen durch ein Verfahren erhalten werden umfassend die Schritte
i) Herstellung einer Mischung umfassend Polyphosphorsäure, mindestens ein Polyazol und/oder mindestens ein oder mehrere Verbindungen, die unter Einwirkung von Wärme gemäß Schritt ii) zur Bildung von Polyazolen geeignet sind,
ii) Erwärmen der Mischung erhältlich gemäß Schritt i) unter Inertgas auf Temperaturen von bis zu 400°C,
iii) Aufbringen einer Schicht unter Verwendung der Mischung gemäß Schritt i) und/oder ii) auf einem Träger,
iv) Behandlung der in Schritt iii) gebildeten Membran.

Hierzu können der Mischung gemäß Schritt i) ein oder mehrere Verbindungen beigefügt werden, die unter Einwirkung von Wärme gemäß Schritt ii) zur Bildung von Polyazolen geeignet sind.

Hierzu sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung i) aromatische und/oder heteroaromatische Carbonsäuren umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Ganz besonders bevorzugt werden Mischungen eingesetzt, die Dicarbonsäuren umfassen, deren Säurereste in para-Stellung stehen, wie beispielsweise Terephthalsäure.

Bei den heteroaromatischen Carbonsäuren handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-ArylEster, oder deren Säureanhydride oder deren Säurechloride.

Des weiteren kann die Mischung i) auch aromatische und heteroaromatische Diaminocarbonsäuren enthalten. Zu diesen gehört unter anderem Diaminobenzoesäure, 4-Phenoxycarbonyl-3,'4'-diaminodiphenylether und deren Mono- und Dihydrochloridderivate.

Die in Schritt i) hergestellte Mischung umfasst vorzugsweise mindestens 0,5 Gew.-%, insbesondere 1 bis 30 Gew.-% und besonders bevorzugt 2 bis 15 Gew.-% Monomere zur Herstellung von Polyazolen.

Gemäß einem weiteren Aspekt der vorliegenden Erfindung umfasst die in Schritt i) hergestellte Mischung Verbindungen, die unter Einwirkung von Wärme gemäß Schritt ii) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Des weiteren können zur Herstellung von Polyazolen Monomere eingesetzt werden, die kovalent gebundene Säuregruppen umfassen. Hierzu gehören unter anderem aromatische und heteroaromatische Dicarbonsäuren bzw. deren Derivate, die mindestens eine Phosphonsäuregruppe aufweisen, beispielsweise 2,5-Dicarboxyphenylphosphonsäure, 2,3-Dicarboxyphenylphosphonsäure 3,4-Dicarboxyphenylphosphonsäure und 3,5-Dicarboxyphenylphosphonsäure; aromatische und heteroaromatische Dicarbonsäuren bzw. deren Derivate, die mindestens eine Sulfonsäuregruppe aufweisen, insbesondere 2,5-Dicarboxyphenylsulfonsäure, 2,3-Dicarboxyphenylsulfonsäure 3,4-Dicarboxyphenylsulfonsäure und 3,5-Dicarboxyphenylsulfonsäure; aromatische und heteroaromatische Diaminocarbonsäuren, die mindestens eine Phosphonsäuregruppe umfassen, beispielsweise 2,3-Diamino-5-carboxyphenylphosphonsäure, 2,3-Diamino-6-carboxyphenylphosphonsäure und 3,4-Diamino-6-carboxyphenylphosphonsäure; aromatische und heteroaromatische Diaminocarbonsäuren, die mindestens eine Sulfonsäuregruppe umfassen, beispielweise 2,3-Diamino-5-carboxyphenylsulfonsäure, 2,3-Diamino-6-carboxyphenylsulfonsäure und 3,4-Diamino-6-carboxyphenylsulfonsäure.

Eine gemäß dem zuvor dargelegten Verfahren hergestellte Polyazolmembran kann die zuvor dargelegten optionalen Komponenten enthalten. Hierzu gehören insbesondere Blend-Polymere und Füllstoffe. Blend-Polymere können in der gemäß Schritt i) und/oder Schritt ii) erhaltenen Mischung unter anderem gelöst, dispergiert oder suspendiert vorliegen. Hierbei liegt das Gewichtsverhältnis von Polyazol zu Polymer (B) vorzugsweise im Bereich von 0,1 bis 50, vorzugsweise von 0,2 bis 20, besonders bevorzugt von 1 bis 10, ohne dass hierdurch eine Beschränkung erfolgen soll. Falls das Polyazol erst in Schritt ii) gebildet wird, kann das Gewichtsverhältnis rechnerisch aus dem Gewicht der Monomeren zur Bildung des Polyazols erhalten werden, wobei die bei der Kondensation freigesetzten Verbindungen, beispielsweise Wasser zu berücksichtigen sind.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt i), Schritt ii) und/oder Schritt iii) erfolgen. Des weiteren können diese Additive, falls diese in flüssiger Form vorliegen, auch nach der Polymerisation gemäß Schritt iv) beigefügt werden. Diese Additive wurden zuvor beschrieben.

Bei der in Schritt i) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Die in Schritt i) erhaltene Mischung wird gemäß Schritt ii) auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Die in Schritt i) und/oder Schritt ii) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Die Bildung des flächigen Gebildes gemäß Schritt iii) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP). Des weiteren kann die Bildung der Membran auch direkt auf der mit einer Sperrschicht versehenen Elektrode erfolgen.

Die Dicke des flächigen Gebildes gemäß Schritt iii) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200 µm.

Die Behandlung der Membran in Schritt iv) erfolgt insbesondere bei Temperaturen im Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt iv) führt zu einer Verfestigung der Membran und zu einer Abnahme der Schichtdicke und Ausbildung einer Membran. Die verfestigte Membran hat im allgemeinen eine Dicke zwischen 15 und 3000 µm, vorzugsweise 20 und 2000 µm, insbesondere zwischen 20 und 1500 µm.

Die obere Temperaturgrenze der Behandlung gemäß Schritt iv) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt iv) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt iv) erhaltene Membran kann selbsttragend ausgebildet werden, d.h. sie kann vom Träger ohne Beschädigung gelöst und anschließend gegebenenfalls direkt weiterverarbeitet werden.

Die Behandlung gemäß Schritt iv) führt zu einer Härtung der Beschichtung. Falls die Membran direkt auf der Elektrode gebildet wird, erfolgt die Behandlung gemäß Schritt iv) solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 50 mN/mM², ohne dass hierdurch eine Beschränkung erfolgen soll.

Über den Grad der Hydrolyse, d.h. die Dauer, Temperatur und Umgebungsfeuchtigkeit, ist die Konzentration und die Menge an Phosphorsäure und damit die Leitfähigkeit der Polymermembran einstellbar. Die Konzentration der Phosphorsäure wird als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 13 und 80, insbesondere zwischen 15 und 80, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Bevorzugte Polymermembranen weisen eine hohe Protonenleitfähigkeit auf. Diese beträgt bei Temperaturen von 120°C mindestens 0,1 S/cm, vorzugsweise mindestens 0,11 S/cm, insbesondere mindestens 0,12 S/cm. Falls die Membranen Polymere mit Sulfonsäuregruppen umfassen, zeigen die Membranen auch bei einer Temperatur von 70°C eine hohe Leitfähigkeit. Die Leitfähigkeit ist unter anderem abhängig vom Sulfonsäuregruppengehalt der Membran. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Eine erfindungsgemäße Membran-Elektroden-Einheit umfasst neben der Polymermembran mindestens zwei Elektroden, die jeweils mit der Membran in Kontakt stehen.

Im allgemeinen umfasst die Elektrode eine Gasdiffusionstage. Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Des weiteren enthält die Elektrode mindestens eine Katalysatorschicht die
i. mindestens ein Edelmetall der Platingruppe, insbesondere Pt, Pd, Ir, Rh, Os, Ru, und/oder mindestens ein Edelmetall Au und/oder Ag
ii. mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V,
aufweist.

Vorzugsweise wird der Katalysator in Form einer Legierung aus den Metallen (i) und (ii) gebildet. Zusätzlich zu der Legierung können weitere katalytisch aktive Substanzen, insbesondere Edelmetalle der Platingruppe, d.h. Pt, Pd, Ir, Rh, Os, Ru, oder auch die Edelmetalle Au und Ag, eingesetzt werden. Weiterhin können auch die Oxide der vorgenannten Edelmetalle und/oder NichtEdelmetalle eingesetzt werden.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 100 nm, insbesondere 30 bis 60 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte dar und können über Transmissionselektronenmikroskopie oder Pulver-Röntgendiffraktometrie bestimmt werden.

Die Katalysatorschicht hat eine Dicke im Bereich von 0,1 bis 50 µm.

Die erfindungsgemäße Membran-Elektroden-Einheit weist eine Beladung mit Katalysator zwischen 0,01 und 20 g/m², vorzugsweise 0,1 und 10 g/m², (Summe aller Edelmetalle) auf, bezogen auf die Oberfläche der Polymermembran.

Das Gewichtsverhältnis der Edelmetalle der Platingruppe bzw. von Au und/oder Ag zu den gemäß der elektrochemischen Spannungsreihe unedleren Metallen beträgt zwischen 1:100 bis 100:1.

Die zuvor dargelegten katalytisch aktiven Partikel können im allgemeinen kommerziell erhalten werden.

Die Herstellung der Katalysatoren ist beispielsweise beschrieben in US392512, JP06007679A940118, oder EP450849A911009

Der Katalysator kann unter anderem auf die Gasdiffusionsanlage aufgebracht werden. Anschließend kann die mit einer Katalysatorschicht versehene Gasdiffusionslage mit einer Polymermembran verbunden werden, um zu einer erfindungsgemäßen Membran-Elektroden-Einheit zu gelangen.

Des weiteren kann die Polymermembran mit einer Katalysatorschicht enthaltend
i. mindestens ein Edelmetall der Platingruppe, insbesondere Pt, Pd, Ir, Rh, Os, Ru, und/oder mindestens ein Edelmetall Au und/oder Ag
ii. mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V,
versehen werden. Diese Membran kann anschließend mit einer Gasdiffusionsanlage verbunden werden. Hierbei kann auch eine mit einer Katalysatorschicht versehene Gasdiffusionsanlage eingesetzt werden. Im allgemeinen genügt jedoch eine Gasdiffusionsanlage, die keinen Katalysator umfasst.

Zum Aufbringen mindestens einer Katalysatorschicht auf eine Polymermembran können verschiedene Methoden eingesetzt werden. So kann beispielsweise in Schritt iii) ein Träger verwendet werden, der mit einer einen Katalysator enthaltenden Beschichtung versehen ist, um die in Schritt iii) bzw. iv) gebildete Schicht mit einer Katalysatorschicht zu versehen.

Hierbei kann die Membran einseitig oder beidseitig mit einer Katalysatorschicht versehen werden. Wird die Membran nur mit einseitig einer Katalysatorschicht versehen, so muß die gegenüberliegende Seite der Membran mit einer Elektrode verpresst werden, die eine Katalysatorschicht aufweist. Falls beide Seiten der Membran mit einer Katalysatorschicht versehen werden sollen, können die nachfolgenden Methoden auch kombiniert angewendet werden, um ein optimales Ergebnis zu erzielen.

In der erfindungsgemäßen Membran-Elektroden-Einheit sind die in der Elektrode enthaltenen Katalysatoren bzw. die an die Gasdiffusionslage angrenzende Katalysatorschicht an der Kathoden- und Anodenseite verschieden. In einer besonders bevorzugten Ausführungsform der Erfindung weist zumindest die Kathodenseite einen Katalysator enthaltend
i. mindestens ein Edelmetall der Platingruppe, insbesondere Pt, Pd, Ir, Rh, Os, Ru, und/oder mindestens ein Edelmetall Au und/oder Ag
ii. mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V,
auf.

Erfindungsgemäß kann die Katalysatorschicht durch ein Verfahren aufgebracht werden, bei dem eine Katalysator-Suspension eingesetzt wird. Darüber hinaus können auch Pulver verwendet werden, die den Katalysator umfassen.

Die Katalysatorsuspension enthält eine katalytisch aktive Substanz. Diese wurden zuvor beschrieben.

Des weiteren kann die Katalysatorsuspension übliche Additive enthalten. Hierzu gehören unter anderem Fluorpolymere wie z.B. Polytetrafluorethylen (PTFE), Verdickungsmittel, insbesondere wasserlösliche Polymere wie z.B. Cellulosederivate, Polyvinylalkohol, Polyethylenglykol, und oberflächenaktive Substanzen.

Zu den oberflächenaktiven Substanzen gehören insbesondere ionische Tenside, beispielsweise Fettsäuresalze, insbesondere Natriumlaurat, Kaliumoleat; und Alkylsulfonsäuren, Alkylsulfonsäuresalze, insbesondere Natriumperfluorohexansulfonat, Lithiumperfluorohexansulfonat, Ammoniumperfluorohexansulfonat, Perfluorohexansulfonsäure, Kaliumnonafluorbutansulfonat, sowie nichtionische Tenside, insbesondere ethoxylierte Fettalkohole und Polyethylenglykole.

Des weiteren kann die Katalysator-Suspension bei Raumtemperatur flüssige Bestandteile umfassen. Hierzu gehören unter anderem organische Lösungsmittel, die polar oder unpolar sein können, Phosphorsäure, Polyphosphorsäure und/oder Wasser. Die Katalysatorsuspension enthält vorzugsweise 1 bis 99 Gew.-%, insbesondere 10 bis 80 Gew.-% flüssige Bestandteile.

Zu den polaren, organischen Lösungsmitteln gehören insbesondere Alkohole, wie Ethanol, Propanol und/oder Butanol.

Zu den organischen, unpolaren Lösungsmittel gehören unter anderem bekannte Dünnschichtverdünner, wie Dünnschichtverdünner 8470 der Firma DuPont, der Terpentinöle umfasst.

Besonders bevorzugte Additive stellen Fluorpolymere, insbesondere Tetrafluorethylenpolymere dar. Gemäß einer besonderen Ausführungsform der vorliegenden Erfindung ist das Gewichtsverhältnis von Fluorpolymer zu Katalysatormaterlal, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Die Katalysatorsuspension kann mit üblichen Verfahren auf die Membran aufgebracht werden. Je nach Viskosität der Suspension, die auch in Pastenform vorliegen kann, sind verschiedene Methoden bekannt mit denen die Suspension aufgebracht werden kann. Geeignet sind Verfahren zum Beschichten von Folien, Geweben, Textilien und/oder Papieren, insbesondere Sprühverfahren und Druckverfahren, wie beispielsweise Schablonen- und Siebdruckverfahren, Inkjet-Verfahren, Walzenauftrag, insbesondere Rasterwalzen, Schlitzdüsenauftrag und Rakeln. Das jeweilige Verfahren sowie die Viskosität der Katalysatorsuspension ist abhängig von der Härte der Membran.

Die Viskosität kann durch den Feststoffgehalt, insbesondere den Anteil an katalytisch aktiven Partikeln, und den Anteil an Additiven beeinflusst werden. Die einzustellende Viskosität ist abhängig von der Auftragsmethode der Katalysatorsuspension, wobei die optimalen Werte sowie deren Bestimmung dem Fachmann geläufig sind.

Je nach Härte der Membran kann eine Verbesserung der Bindung von Katalysator und Membran durch Erhitzen und/oder Pressen erfolgen. Darüber hinaus steigt die Bindung zwischen Membran und Katalysator durch eine Behandlung gemäß Schritt iv) an.

Des weiteren kann das Aufbringen einer Katalysatorschicht gleichzeitig mit der Behandlung der Membran bis diese selbsttragend ist gemäß Schritt iv) erfolgen. Dies kann beispielsweise dadurch erfolgen, dass eine Wasser enthaltende Katalysatorsuspension auf das flächige Gebilde gemäß Schritt iii) aufgebracht wird. Hierbei kann die Suspension in Form von feinen Tröpfchen auf das flächige Gebilde gemäß Schritt iii) aufgesprüht werden. Neben Wasser kann die Suspension auch weitere Lösungsmittel und/oder Verdünnungsmittel enthalten. Abhängig vom Wassergehalt erfolgt die Härtung der Membran gemäß Schritt iv). Dementsprechend kann der Wassergehalt in weiten Bereichen liegen. Vorzugsweise liegt der Wassergehalt im Bereich von 0,1 bis 99, insbesondere 1 bis 95 Gew.-%, bezogen auf die Katalysatorsuspension.

Gemäß einem besonderen Aspekt der vorliegenden Erfindung wird die Katalysatorschicht mit einem Pulver-Verfahren aufgebracht. Hierbei wird ein Katalysatorpulver eingesetzt, das zusätzliche Additive, die beispielhaft zuvor dargelegt wurden, enthalten kann.

Zum Aufbringen des Katalysatorpulvers können unter anderem Sprühverfahren und Siebverfahren eingesetzt werden. Beim Sprühverfahren wird die Pulvermischung mit einer Düse, beispielsweise einer Schlitzdüse auf die Membran gesprüht. Im allgemeinen wird anschließend die mit einer Katalysatorschicht versehene Membran erhitzt, um die Verbindung zwischen Katalysator und Membran zu verbessern. Das Erhitzen kann beispielsweise über eine heiße Walze erfolgen. Derartige Methoden sowie Vorrichtungen zum Auftragen des Pulvers sind unter anderem in DE 195 09 748, DE 195 09 749 und DE 197 57 492 beschrieben.

Beim Siebverfahren wird das Katalysatorpulver mit einem rüttelnden Sieb auf die Membran aufgetragen. Eine Vorrichtung zum Aufbringen eines Katalysatorpulvers auf eine Membran ist in WO 00/26982 beschrieben. Nach dem Auftragen des Katalysatorpulvers kann die Bindung von Katalysator und Membran durch Erhitzen und/ oder den Schritt iv) verbessert werden. Hierbei kann die mit mindestens einer Katalysatorschicht versehene Membran auf eine Temperatur im Bereich von 50 bis 200°C, insbesondere 100 bis 180°C erhitzt werden.

Darüber hinaus kann die Katalysatorschicht durch ein Verfahren aufgebracht werden, bei dem man eine einen Katalysator enthaltende Beschichtung auf einen Träger aufbringt und anschließend die auf dem Träger befindliche Beschichtung enthaltend einen Katalysator auf eine Polymermembran überträgt. Beispielhaft ist ein derartiges Verfahren in WO 92/15121 beschrieben.

Der mit einer Katalysatorbeschichtung versehene Träger kann beispielsweise dadurch hergestellt werden, dass eine zuvor beschriebene Katalysatorsuspension hergestellt wird. Diese Katalysatorsuspension wird anschließend auf eine Trägerfolie, beispielsweise aus Polytetrafluorethylen, aufgetragen. Nach dem Auftragen der Suspension werden die flüchtigen Bestandteile entfernt.

Das Übertragen der Beschichtung enthaltend einen Katalysator kann unter anderem durch Heißpressen erfolgen. Hierzu wird der Verbund umfassend eine Katalysatorschicht und eine Membran sowie eine Trägerfolie auf eine Temperatur im Bereich von 50°C bis 200°C erhitzt und mit einem Druck von 0,1 bis 5 MPa verpresst. Im allgemeinen genügen einige Sekunden, um die Katalysatorschicht mit der Membran zu verbinden. Vorzugsweise liegt diese Zeit im Bereich von 1 Sekunde bis 5 Minuten, insbesondere 5 Sekunden bis 1 Minute.
Gemäß einer besonderen Ausführungsform der vorliegenden Erfindung weist die Katalysatorschicht eine Dicke im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung umfasst die mit mindestens einer Katalysatorschicht versehene Membran 0,01 bis 20 mg/cm², 0,1 bis 10,0 mg/cm², vorzugweise 0,3 bis 6,0 mg/cm² und besonders bevorzugt 0,3 bis 3,0 mg/cm² (Summe aller Edelmetalle). Diese Werte können durch Elementaranalyse einer flächigen Probe bestimmt werden.

Des weiteren kann die Membran, die auch mit einer Katalysatorschicht versehen sein kann, durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,3 A/cm², bevorzugt 0,4 A/cm², besonders bevorzugt 0,5 A/cm². Diese Stromdichte wird im Betrieb mit reinem Wasserstoff an der Anode und Luft (ca. 20 Vol.% Sauerstoff, ca. 80 Vol.-% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

Gemäß einer besonderen Ausführungsform der vorliegenden Erfindung weist die Katalysatorschicht einen geringen Edelmetallgehalt auf. Der Edelmetall-Gehalt einer bevorzugten Katalysatorschicht, die von einer erfindungsgemäßen Membran umfasst wird, beträgt vorzugsweise höchstens 2 mg/cm², insbesondere höchstens 1 mg/cm², ganz besonders bevorzugt höchstens 0,5 mg/cm². Gemäß einem besonderen Aspekt der vorliegenden Erfindung weist eine Seite einer Membran einen höheren Metallgehalt auf als die gegenüberliegende Seite der Membran. Vorzugsweise ist der Metallgehalt der einen Seite mindestens doppelt so hoch wie der Metallgehalt der gegenüberliegenden Seite.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

Beispiele:

Tabelle 1 zeigt die Zellspannungen von 4 verschiedenen Membran-Elektroden-Einheiten bei Stromdichten von jeweils 0.2 A/cm² und 0.5 A/cm². Die Werte wurden bei 160°C in einer Einzel-Brennstoffzelle mit einer aktiven Fläche von 50cm² aufgenommen. Als Anodengas diente reiner Wasserstoff (bei einer Stöchiometrie 1.2 und einem Druck von 1 barₐ), als Kathodengas diente Luft (bei einer Stöchiometrie 2 und einem Druck von 1 barₐ). Die Zusammensetzung der einzelnen Proben wird im folgenden beschrieben:

### Probe 1:

Anode A: Der Anodenkatalysator ist Pt geträgert auf Kohlenstoff. Die Elektrodenbeladung beträgt 1 mg_{Pt}/cm².
Kathode B: Der Kathodenkatalysator ist Pt geträgert auf Kohlenstoff. Die Elektrodenbeladung beträgt 1 mg_{Pt}/cm².
Membran A : Als Membran dient eine Phosphorsäure-dotierte Polymermembran, deren Polymer aus Poly(2,2'-m-phenylen)-5,5'-bisbenzimidazol)-co-poly(2,5-pyridin)-5,5'-bisbenzimidazol) besteht.

### Probe 2:

Anode A: Der Anodenkatalysator ist Pt geträgert auf Kohlenstoff. Die Elektrodenbeladung beträgt 1mg_{Pt}/cm².
Kathode B: Der Kathodenkatalysator ist Pt geträgert auf Kohlenstoff. Die Elektrodenbeladung beträgt 1mg_{Pt}/cm².
Membran B : Als Membran dient eine Phosphorsäure-dotierte Polymermembran, deren Polymer aus Poly(2,2'-m-phenylen)-5,5'-bisbenzimidazol) besteht.

### Probe 3:

Anode A: Der Anodenkatalysator ist Pt geträgert auf Kohlenstoff. Die Elektrodenbeladung beträgt 1 mg_{Pt}/cm².
Kathode B: Der Kathodenkatalysator ist eine PtNi-Legierung geträgert auf Kohlenstoff. Die Elektrodenbeladung beträgt 1mg_{Pt}/cm². Das Pt:Ni Verhältnis ist 1:1. Membran A : Als Membran dient eine Phosphorsäure-dotierte Polymermembran, deren Polymer aus Poly(2,2'-m-phenylen)-5,5'-bisbenzimidazol)-co-poly(2,5-pyridin)-5,5'-bisbenzlmidazol) besteht.

### Probe 4:

Anode A: Der Anodenkatalysator ist Pt geträgert auf Kohlenstoff. Die Elektrodenbeladung beträgt 1 mg_{Pt}/cm².
Kathode B: Der Kathodenkatalysator ist eine PtNi-Legierung geträgert auf Kohlenstoff. Die Elektrodenbeladung beträgt 1mg_{Pt/}cm². Das Pt:Ni Verhältnis ist 1:1. Membran B : Als Membran dient eine Phosphorsäure-dotierte Polymermembran, deren Polymer aus Poly(2,2'-m-phenylen)-5,5'-bisbenzimidazol) besteht.

Vergleicht man Probe 1 und 2, welche die gleichen Elektroden und Pt-Katalysatoren enthalten, jedoch die unterschiedlichen Membranen A und B, so erkennt man, das durch die Verwendung von Membran B eine nur sehr kleine Erhöhung der Zellspannung um 3 bzw. 4 mV bei 0.2 und 0.5 A/cm² erreicht werden kann. Verändert man bei gleichbleibender Anode mit Pt-Katalysator die Kathode (Probe 3 mit Membran A und Probe 4 mit Membran B) zu einem Legierungskatalysator wie er in dieser Schrift beschrieben ist, so kann die Zellspannung deutlich erhöht werden. So erhöht sich mit Membran A die Zellspannung um 22 mV bei 0.2 A/cm² wenn besagter Legierungskatalysator zum Einsatz kommt. Unter Verwendung von Membran B erhöht sich die Zellspannung bei 0.2 A/cm² um 37 mV wenn ein Legierungskatalysator zum Einsatz kommt.

**Tabelle 1:**

| Nr. | Kathodenkatalysator | Membran | Zellspannung in [V] bei | |
|---|---|---|---|---|
| | | | 0.2 A/cm² | 0.5A/cm² |
| 1 | Pt/C, 1 mg_{Pt}/cm² | A | 0.634 | 0.555 |
| 2 | Pt/C, 1 mg_{Pt}/cm² | B | 0.637 | 0.559 |
| 3 | PtNi/C, 1mgₘₑₜₐₗ/cm² | A | 0.656 | 0.571 |
| 4 | PtNi/C, 1 mgₘₑₜₐₗ/cm² | B | 0.674 | 0.598 |

## Patentansprüche

1. Membran-Elektroden-Einheit umfassend
A) mindestens eine Polymermembran welche mindestens ein basisches Polymer mit mindestens einem Stickstoffatom in einer Wiederholungseinheit enthält, wobei die Polymermembran mindestens eine Mineralsäure enthält, die
B) mindestens zwei Elektroden,
**dadurch gekennzeichnet, dass** mindestens eine Elektrode einen Katalysator enthaltend
i. mindestens ein Edelmetall der Platingruppe, insbesondere Pt, Pd, Ir, Rh, Os, Ru, und/oder mindestens ein Edelmetall Au und/oder Ag
ii. mindestens ein gemäß der elektrochemischen Spannungsreihe unedleres Metall als das unter (i.) genannte Metall, insbesondere ausgewählt aus der Gruppe Fe, Co, Ni, Cr, Mn, Zr, Ti, Ga, V,
aufweist.

2. Membran-Elektroden-Einheit gemäß Anspruch 1, **dadurch gekennzeichnet, daß** eine Mischung von einem oder mehreren basischen Polymeren mit einem weiteren Polymeren eingesetzt wird.

3. Membran-Elektroden-Einheit gemäß Anspruch 1, **dadurch gekennzeichnet, daß** das basische Polymer mindestens einen aromatischen Ring mit mindestens einem Stickstoffatom enthält, wobei der aromatisch Ring vorzugsweise ein fünf- oder sechsgliedrigen Ring mit eins bis drei Stickstoffatomen, der mit einem anderen Ring, insbesondere einem anderen aromatischen Ring, anelliert sein kann, ist.

4. Membran-Elektroden-Einheit gemäß Anspruch 1, **dadurch gekennzeichnet, daß** die Membran-Elektroden-Einheit Phosphorsäure und/oder Schwefelsäure als Mineralsäure, vorzugsweise in der Polymermembran dotiert, umfasst.

5. Membran-Elektroden-Einheit gemäß Anspruch 1, **dadurch gekennzeichnet, dass** Basizität des Polymeren über das Molverhältnis von Stickstoffatomen zu Kohlenstoffatomen definiert wird und das Molverhältnis von Stickstoffatomen zu Kohlenstoffatomen im Bereich von 1:1 bis 1:100, vorzugsweise im Bereich von 1:2 bis 1:20 liegt.

6. Membran-Elektroden-Einheit gemäß Anspruch 1, **dadurch gekennzeichnet, dass** Polymer ein Polymer auf Basis von Polyazol enthaltend wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 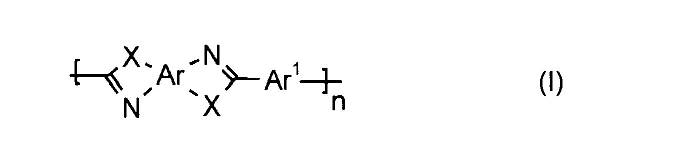 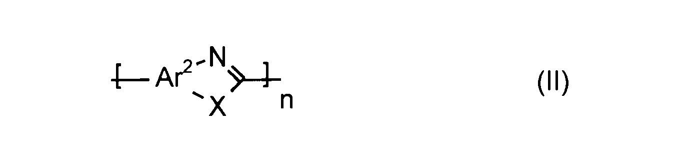 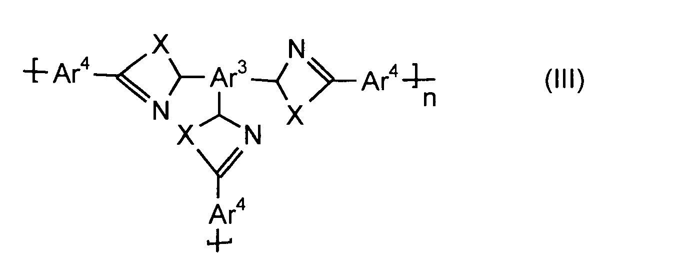 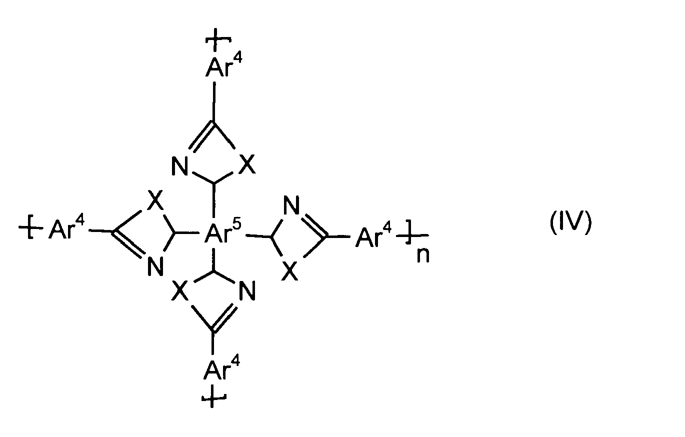 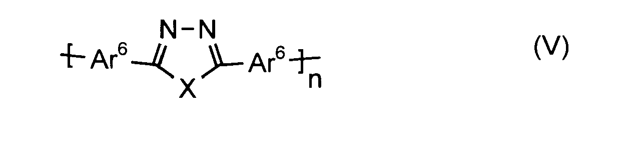 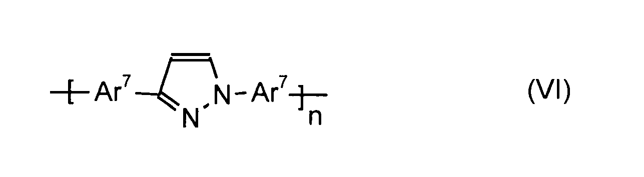 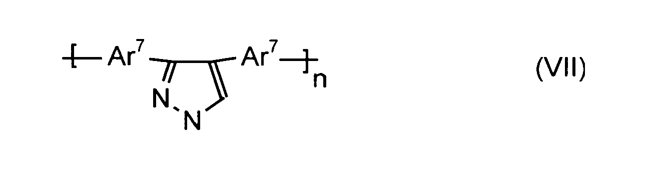 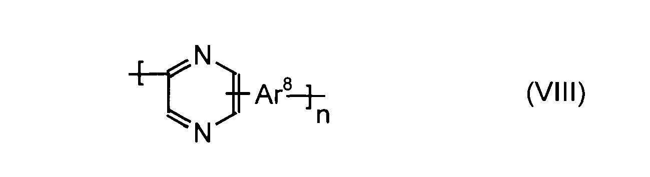 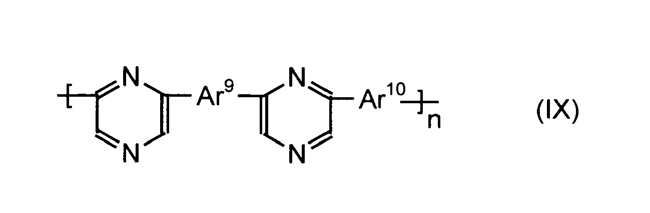 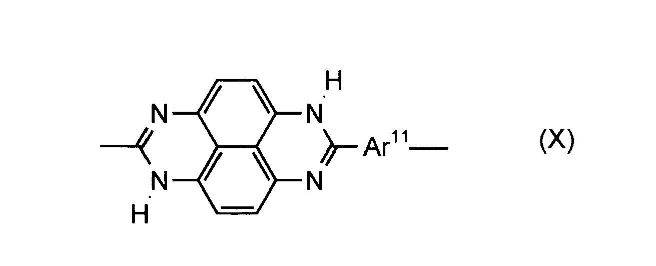 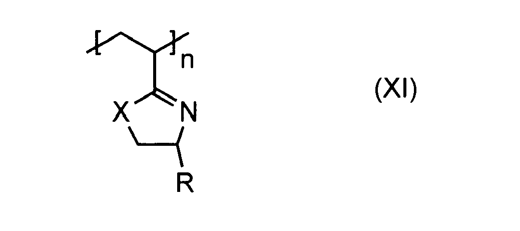 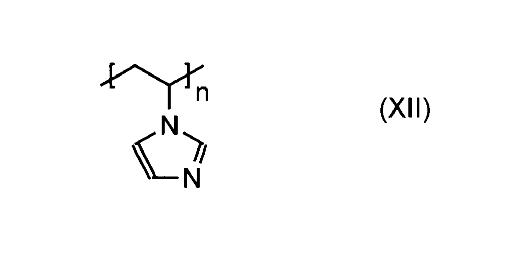 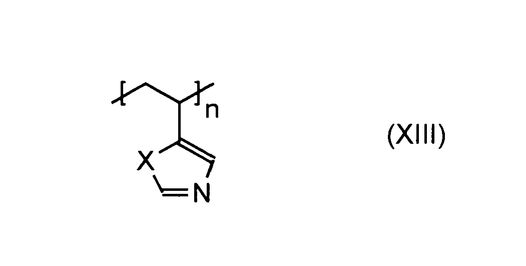 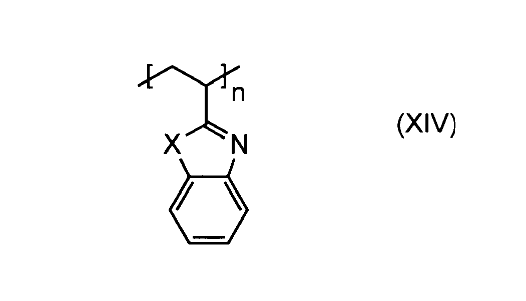 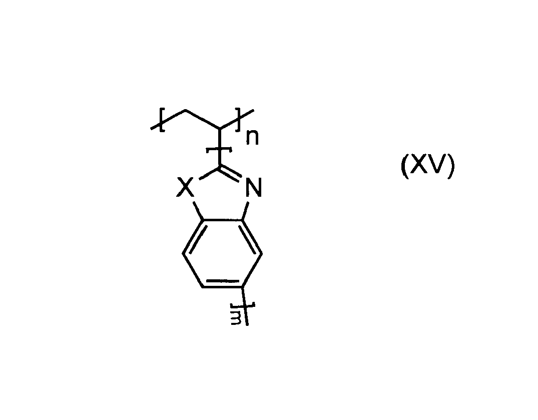 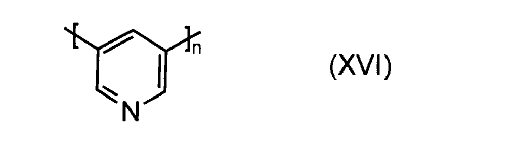 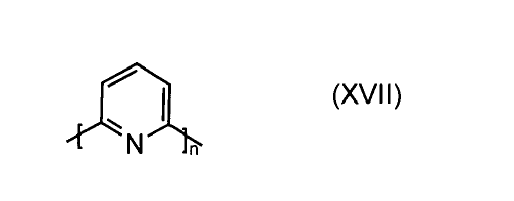 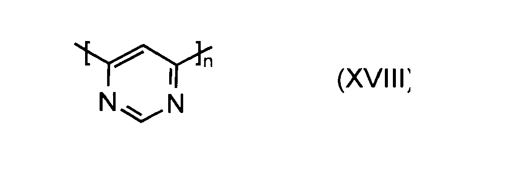 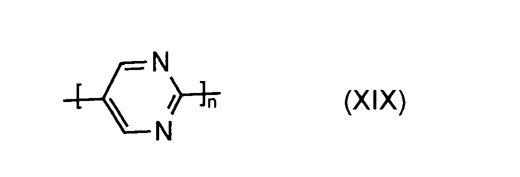 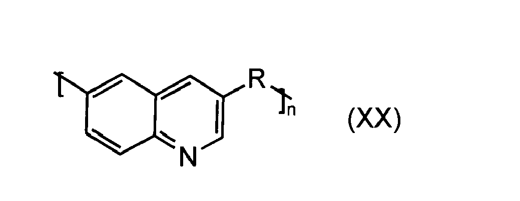 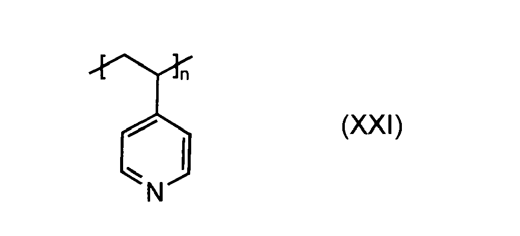 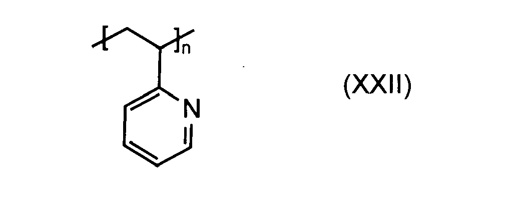 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine zwei oder dreibindige aromatische oder heteroaromatische Gruppe, die ein- oder mehrkernig sein kann,
Ar³ gleich oder verschieden sind und für eine dreibindige aromatische oder heteroaromatische Gruppe, die ein- oder mehrkernig sein kann,
Ar⁴ gleich oder verschieden sind und für eine dreibindige aromatische oder heteroaromatische Gruppe, die ein- oder mehrkernig sein kann,
Ar⁵ gleich oder verschieden sind und für eine vierbindige aromatische oder heteroaromatische Gruppe, die ein- oder mehrkernig sein kann,
Ar⁶ gleich oder verschieden sind und für eine zweibindige aromatische oder heteroaromatische Gruppe, die ein- oder mehrkernig sein kann,
Ar⁷ gleich oder verschieden sind und für eine zweibindige aromatische oder heteroaromatische Gruppe, die ein- oder mehrkernig sein kann,
Ar⁸ gleich oder verschieden sind und für eine dreibindige aromatische oder heteroaromatische Gruppe, die ein- oder mehrkernig sein kann,
Ar⁹ gleich oder verschieden sind und für eine zwei- oder drei- oder vierbindige aromatische oder heteroaromatische Gruppe, die ein- oder mehrkernig sein kann,
Ar¹⁰ gleich oder verschieden sind und für eine zwei- oder dreibindige aromatische oder heteroaromatische Gruppe, die ein- oder mehrkernig sein kann,
Ar¹¹ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromatische Gruppe steht, mit der Maßgabe das R in der Formel (XX) nicht für Wasserstoff steht und
n, m eine ganze Zahl größer gleich 10, bevorzugt größer gleich 100 ist.

7. Membran-Elektroden-Einheit gemäß Anspruch 1, **dadurch gekennzeichnet, dass** Polymer ein Polymer enthaltend wiederkehrende Benzimidazoleinheiten der Formel 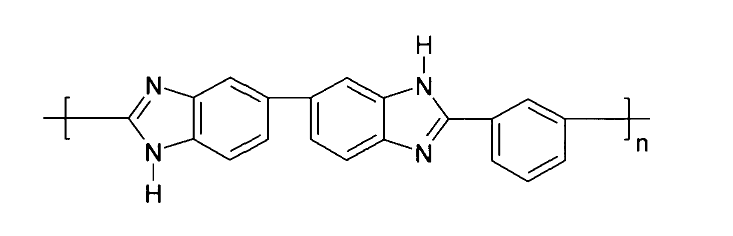 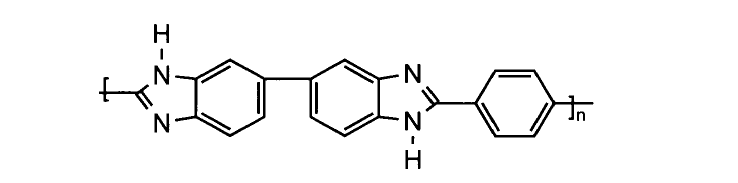 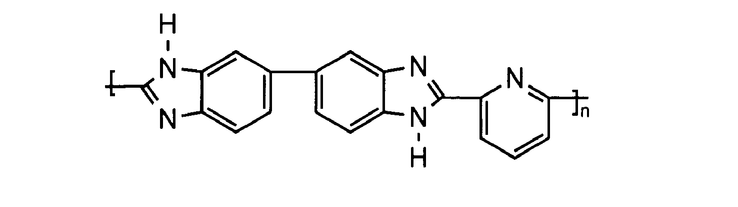 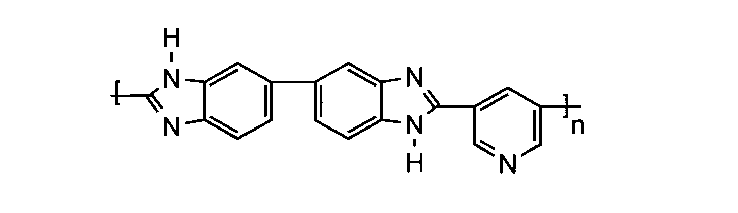 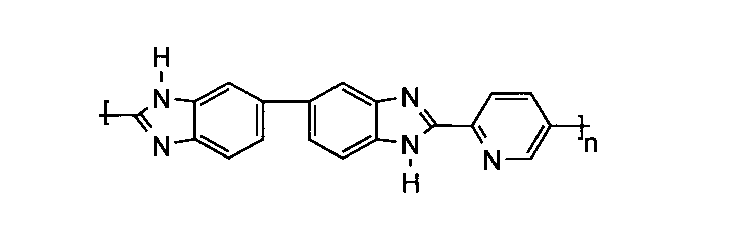 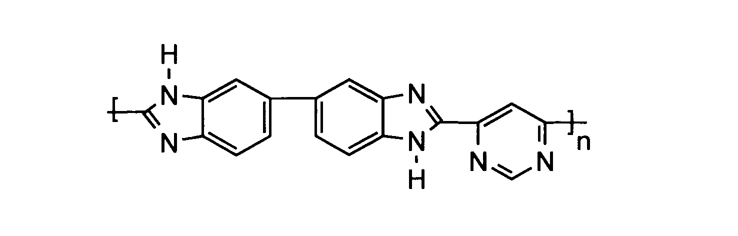 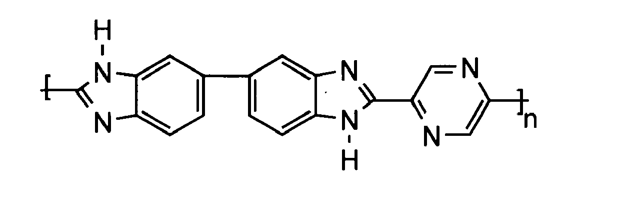 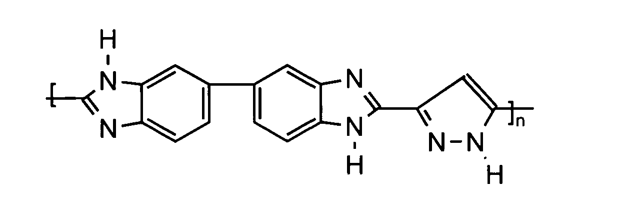 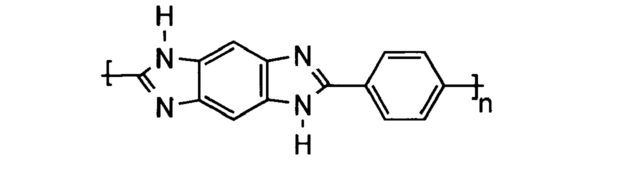 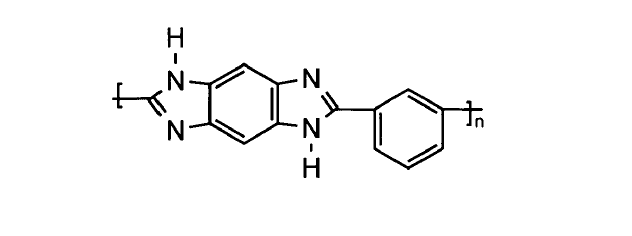 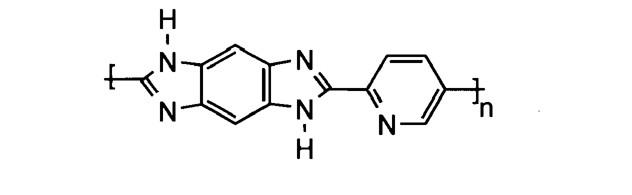 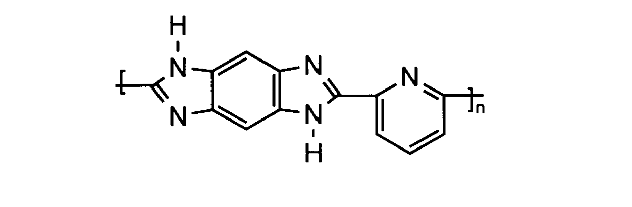 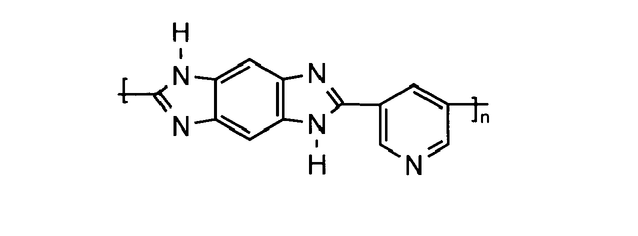 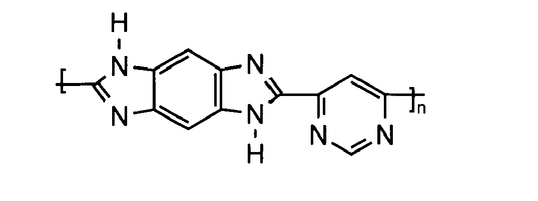 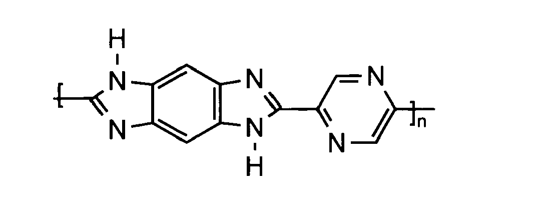 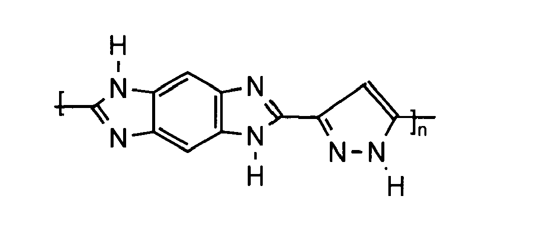 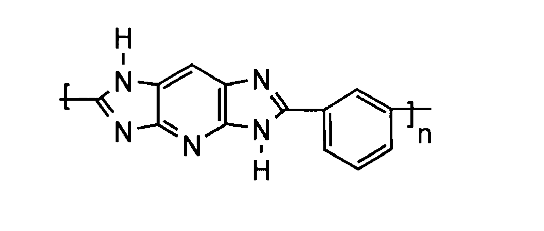 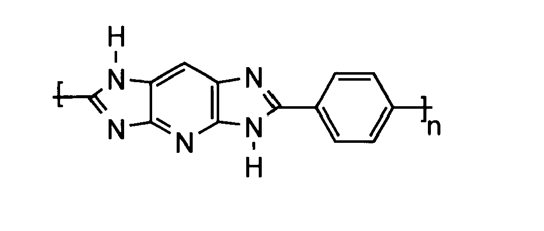 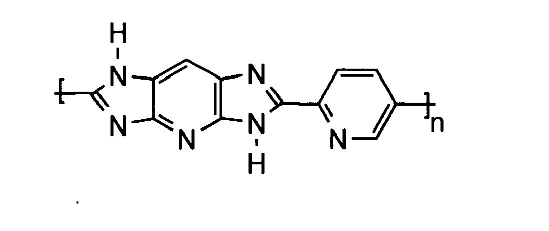 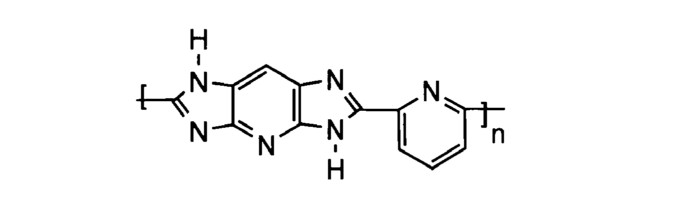 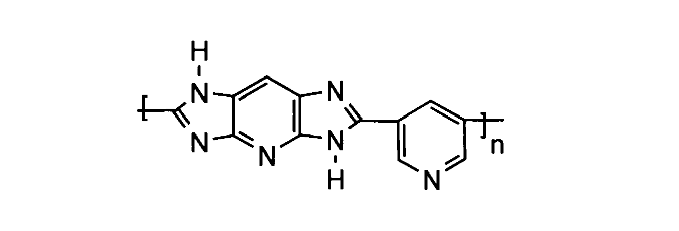 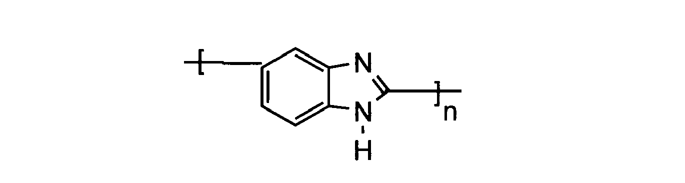 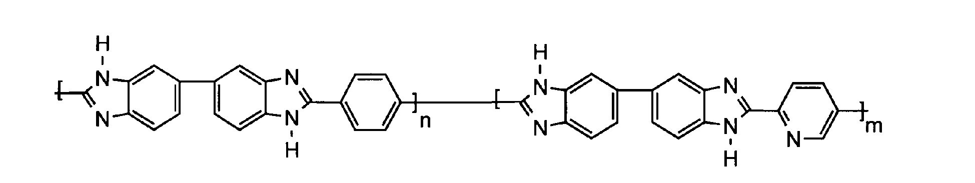 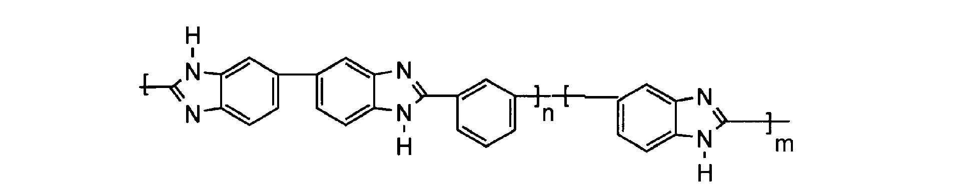 wobei n und m eine ganze Zahl größer gleich 10, vorzugsweise größer gleich 100, ist.

8. Membran-Elektroden-Einheit gemäß Anspruch 1, **dadurch gekennzeichnet, daß** das basische Polymer Polyimidazole, Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly(pyrimidine), Poly(tetrazapyrene) und Polybenzimidazol, vorzugsweise para-Polybenzimidazole, umfasst.

9. Membran-Elektroden-Einheit gemäß einem der Ansprüche 1 bis 8, **dadurch gekennzeichnet, dass** der Katalysator auf die Polymermembran aufgebracht wird.

10. Membran-Elektroden-Einheit gemäß einem oder mehreren der Ansprüche 1 bis 9, **dadurch gekennzeichnet, dass** die Katalysatorschicht eine Dicke im Bereich von 0,1 bis 50 µm aufweist.

11. Membran-Elektroden-Einheit gemäß einem oder mehreren der Ansprüche 1 bis 10, **dadurch gekennzeichnet, dass** der Katalysator katalytisch aktive Partikel umfasst, die eine Größe im Bereich von 5 bis 200 nm aufweisen.

12. Membran-Elektroden-Einheit gemäß einem oder mehreren der Ansprüche 1 bis 11, **dadurch gekennzeichnet, dass** der Katalysator geträgerte katalytisch aktive Partikel umfasst, wobei die Größe der Katalysatorpartikel im Bereich von 1 bis 20 nm liegt.

13. Membran-Elektroden-Einheit gemäß einem oder mehreren der Ansprüche 1 bis 12, **dadurch gekennzeichnet, dass** die Membran-Elektroden-Einheit 0,01 bis 20 g/m², vorzugsweise 0,1 bis 10 g/m², einer katalytisch aktiven Substanz umfasst.

14. Membran-Elektroden-Einheit gemäß Anspruch 13, **dadurch gekennzeichnet, dass** die katalytisch aktiven Partikel Kohlenstoff als Träger enthalten.

15. Membran-Elektroden-Einheit gemäß einem oder mehreren der Ansprüche 1 bis 14, **dadurch gekennzeichnet, dass** Gewichtsverhältnis der Edelmetalle der Platingruppe bzw. von Au und/oder Ag (i) zu den gemäß der elektrochemischen Spannungsreihe unedleren Metallen (ii) zwischen 1:100 bis 100:1 beträgt.

16. Brennstoffzelle enthaltend eine oder mehrere Membran-Elektroden-Einheiten gemäß einem oder mehreren der Ansprüche 1 bis 15.
